# EUROPÄISCHE PATENTSCHRIFT

(11) **EP 3 066 884 B1**
(45) Veröffentlichungstag und Bekanntmachung des Hinweises auf die Patenterteilung: **08.08.2018**
(21) Anmeldenummer: 15700954.9
(22) Anmeldetag: 05.01.2015
(51) Int. Cl.: H04W 74/08, B61L 3/18, B61L 15/00, H04B 3/54

(54) **DATENÜBERTRAGUNG IN EINEM SEGMENTIERTEN KOMMUNIKATIONSNETZ**
DATA TRANSMISSION IN A SEGMENTED COMMUNICATION NETWORK
TRANSMISSION DE DONNÉES DANS UN RÉSEAU DE COMMUNICATION SEGMENTÉ

(30) Priorität: 10.01.2014 DE 102014200345
(43) Veröffentlichungstag der Anmeldung: 14.09.2016
(73) Patentinhaber: Siemens Aktiengesellschaft, 80333 München (DE)
(72) Erfinder: LINZMAIER, Klaus-Peter, 73650 Winterbach (DE)
(86) Internationale Anmeldenummer: PCT/EP2015/050022
(87) Internationale Veröffentlichungsnummer: WO 2015/104229

(56) Entgegenhaltungen:
- WO-A1-2013/155672
- US-A1- 2007 019 604
- "PRB Segment Controller User's Guide", , 8. März 2006 (2006-03-08), Seiten 1-31, XP055100914, Gefunden im Internet: URL:http://dfpcorec-p.internal.epo.org/wf/ storage/144C548C2100003D58/originalPdf#zoo m=100 [gefunden am 2014-02-07]

## Beschreibung

Die Erfindung betrifft ein Verfahren zur Datenübertragung in einem Kommunikationsnetz, das in mehrere Segmente, die jeweils einen Segmentmaster und ein Übertragungsmedium aufweisen, aufgeteilt ist und wenigstens einen Slaveteilnehmer aufweist.

Segmentierte Kommunikationsnetze sind beispielsweise auf dem Gebiet des Mobilfunks bekannt, wobei die Segmente eines Mobilfunknetzes dessen Funkzellen sind. Ferner sind segmentierte Kommunikationsnetze beispielsweise für Förder- oder Transportsysteme mit schienengeführten Transporteinheiten bekannt, bei denen Schienenstrecken in verschiedene Schienensegmente unterteilt sind, innerhalb derer Kommunikationssegmente installiert werden. Derartige Kommunikationsnetze weisen mobile Teilnehmer auf, die sich in verschiedenen Segmenten aufhalten können, und für die bei einem Wechsel von einem Segment in ein anderes Segment die Datenübertragung entsprechend umzustellen ist.

WO 2013/155672 A1 offenbart ein Verfahren für drahtlose Kommunikation, bei dem ein Gerät als ein Master eines Clusters von Geräten, die in einem ersten Frequenzband operieren, durch eine Basisstation eines übergeordneten Netzwerks festgelegt und gesteuert wird.

Aus US 2007/0019604 A1 ist ein Medienzugriffsverfahren für ein drahtloses Sensornetzwerk bekannt, bei dem in Überlappenden Bereichen unbewegliche Knoten zum Einsatz kommen, die mittels eines CSMA/CA Verfahrens kommunizieren. In den Segmenten selbst kommen Knoten zum Einsatz, die mittels eines TDMA Verfahrens kommunizieren. Knoten die beide Verfahren beherrschen oder ein Verfahren, dass beide Verfahren kombiniert sind nicht offenbart.

Der Erfindung liegt die Aufgabe zugrunde, ein verbessertes Verfahren zur Datenübertragung in einem segmentierten Kommunikationsnetz anzugeben.

Die Aufgabe wird erfindungsgemäß durch die Merkmale des Anspruchs 1 gelöst.

Vorteilhafte Ausgestaltungen der Erfindung sind Gegenstand der Unteransprüche.

Bei dem erfindungsgemäßen Verfahren werden Daten in einem Kommunikationsnetz übertragen, das in mehrere jeweils ein Übertragungsmedium aufweisende Segmente aufgeteilt ist und wenigstens einen Slaveteilnehmer aufweist. Dabei wird jedes Segment mit einem Segmentmaster zur Koordinierung der Datenübertragung in dem Segment versehen und je zwei benachbarte Segmente werden durch einen mit den Übertragungsmedien beider Segmente verbundenen Übergangsbereich verbunden. Ein Segmentmaster und ein Slaveteilnehmer, der sich in dem Segment des Segmentmasters oder in einem dieses Segment mit einem benachbarten Segment verbindenden Übergangsbereich befindet, kommunizieren über das Übertragungsmedium des Segments des Segmentmasters durch Senden von Nachrichten, wobei der Segmentmaster dem Slaveteilnehmer wenigstens ein Sendezeitintervall zum Senden von Nachrichten zuteilt, so dass sich die von dem Segmentmaster zugeteilten Sendezeitintervalle nicht überschneiden. Ein Slaveteilnehmer innerhalb eines Übergangsbereiches prüft vor dem Senden einer Nachricht, ob die Übertragungsmedien beider durch den Übergangsbereich verbundenen Segmente frei zum Senden einer Nachricht sind, und sendet die Nachricht nur, wenn die Prüfung ergibt, dass beide Übertragungsmedien frei zum Senden einer Nachricht sind.

Das Verfahren ermöglicht eine weitgehend kollisionsfreie Datenübertragung in einem segmentierten Kommunikationsnetz, das mobile Slaveteilnehmer aufweist, die ihre Positionen zwischen verschiedenen Segmenten des Kommunikationsnetzes verändern können. Dazu werden ein Master-Slave-Prinzip und eine Belegungsprüfung von Übertragungsmedien zu einem Medienzugriffsverfahren kombiniert, um Datenkollisionen bei der Datenübertragung über die Übertragungsmedien zu vermeiden.

Bei dem verwendeten Master-Slave-Prinzip wird jedes Segment mit einem Segmentmaster versehen, der Slaveteilnehmern, die sich in seinem Segment oder in einem Übergangsbereich zu einem benachbarten Segment befinden, sich nicht überschneidende Sendezeitintervalle zum Senden von Nachrichten zuteilt. Dadurch greift zu jedem Zeitpunkt immer nur höchstens eine sich in einem bestimmten Segment befindende Netzkomponente (der Segmentmaster oder ein Slaveteilnehmer) auf das Übertragungsmedium des jeweiligen Segments zu.

Bei einem Segmentwechsel eines Slaveteilnehmers von einem Segment in ein anderes Segment durchquert der Slaveteilnehmer einen die beiden Segmente verbindenden Übergangsbereich, in dem er Nachrichten aus den beiden Segmenten empfängt und Nachrichten in beide Segmente senden kann. Ohne weitere Maßnahmen könnte dies zu Datenkollisionen führen, wenn dem Slaveteilnehmer von dem Segmentmaster eines der beiden Segmente ein Sendezeitintervall zugeteilt wird, in dem das Übertragungsmedium des anderen Segments bereits belegt ist.

Um derartige Datenkollisionen zu vermeiden, sieht das erfindungsgemäße Verfahren eine Belegungsprüfung der Übertragungsmedien vor, bei der ein Slaveteilnehmer, der sich in einem Übergangsbereich befindet, vor dem Senden prüft, ob die Übertragungsmedien beider durch den Übergangsbereich verbundenen Segmente frei zum Senden einer Nachricht sind, und die Nachricht nur sendet, wenn diese Prüfung ergibt, dass beide Übertragungsmedien frei zum Senden einer Nachricht sind. Auf diese Weise wird eine Datenkollision, die von einem Slaveteilnehmer in einem Übergangsbereich verursacht wird, zwar nicht völlig ausgeschlossen, aber ihre Wahrscheinlichkeit wird erheblich reduziert. Verbleibende Datenkollisionen, die beispielsweise durch gleichzeitiges Senden von Nachrichten eines Slaveteilnehmers in einem Übergangsbereich und einer Netzkomponente in einem der durch den Übergangsbereich verbundenen Segmente entstehen, werden separat behandelt (was zu einer Nachrichtenwiederholung führen kann), werden jedoch sehr selten sein und deshalb toleriert.

Die erfindungsgemäße Vermeidung von Datenkollisionen in einem segmentierten Kommunikationsnetz hat gegenüber anderen Verfahren den Vorteil, dass sie verhältnismäßig einfach und kostengünstig realisierbar ist. Beispielsweise wäre denkbar, Datenkollisionen durch aus Übergangsbereichen gesendeten Nachrichten dadurch zu vermeiden, dass die Zuteilung der Sendezeitintervalle durch die Segmentmaster benachbarter Segmente derart koordiniert wird, dass sich diese Sendezeitintervalle nicht überschneiden. Durch die Verkettung aller Segmente würde dies aber die Koordinierung sämtlicher Segmentmaster erfordern und daher einen wesentlich höheren technischen und finanziellen Aufwand verursachen als die erfindungsgemäße Kombination eines Master-Slave-Prinzips mit einer Belegungsprüfung der Übertragungsmedien. Insbesondere erfordert das erfindungsgemäße Verfahren keine Koordinierung und Synchronisierung der Segmentmaster verschiedener Segmente des Kommunikationsnetzes, d.h. die Segmentmaster verschiedener Segmente arbeiten unabhängig voneinander.

Ferner kann zur Realisierung des erfindungsgemäßen Verfahrens auf bereits bekannte Verfahren wie den so genannten Carrier Sense Multiple Access (CSMA) zur Belegungsprüfung der Übertragungsmedien zurückgegriffen werden, die mit kommerziell preisgünstig verfügbaren Komponenten realisiert werden können.

Insgesamt ermöglicht die Erfindung daher vorteilhaft eine effiziente und dennoch relativ einfach und kostengünstig implementierbare Realisierung einer breitbandigen und weitgehend kollisionsfreien Datenübertragung in einem segmentierten Kommunikationsnetz, wobei weder für die Anzahlen der Segmente und Teilnehmer noch für die Ausdehnung des Kommunikationsnetzes wesentliche Einschränkungen bestehen, da die Segmente praktisch unabhängig voneinander verwaltet werden.

Eine Ausgestaltung der Erfindung sieht vor, dass ein Slaveteilnehmer innerhalb eines Segments vor dem Senden einer Nachricht prüft, ob das Übertragungsmedium des Segments, in dem er sich befindet, frei zum Senden einer Nachricht ist, und die Nachricht nur sendet, wenn die Prüfung ergibt, dass das Übertragungsmedium frei zum Senden einer Nachricht ist.

Dadurch wird die Belegungsprüfung von Übertragungsmedien durch Slaveteilnehmer nicht nur in Übergangsbereichen, sondern immer, d.h. auch außerhalb der Übergangsbereiche vorgenommen. Dies vereinfacht das Verfahren weiter, da eine Belegungsprüfung nicht von der Position eines Slaveteilnehmers abhängt. Ferner sehen Standardverfahren der Medienzugriffsverwaltung wie CSMA sowieso eine ständige Belegungsprüfung vor, so dass diese Standardverfahren verwendet werden können, ohne sie modifizieren zu müssen.

Eine weitere Ausgestaltung der Erfindung sieht vor, dass von einem Segmentmaster Nachrichten für einen Slaveteilnehmer in einer Nachrichtenwarteschlange zwischengespeichert und in der Nachrichtenwarteschlange zwischengespeicherte Nachrichten gebündelt gesendet werden.

Mit anderen Worten sammelt ein Segmentmaster Nachrichten für einen Slaveteilnehmer und sendet sie dann gebündelt statt jede Nachricht einzeln zu senden. Dadurch wird der Datenverkehr über das Übertragungsmedium vorteilhaft reduziert bzw. die Effizienz der Nutzung des Übertragungsmediums erhöht.

Eine weitere Ausgestaltung der Erfindung sieht vor, dass die Übertragungsmedien verschiedener Segmente voneinander getrennt werden, so dass Nachrichten aus einem Segment in kein anderes Segment übertragen werden.

Dadurch wird durch eine strikte Trennung der Segmente vorteilhaft verhindert, dass Nachrichten aus einem Segment in ein anderes Segment übertragen werden und dort Datenkollisionen verursachen.

Eine dazu alternative Ausgestaltung der Erfindung sieht vor, dass jedes Segment als ein Empfangsbereich definiert wird, innerhalb dessen von dem Segmentmaster des Segments gesendete Nachrichten durch einen Slaveteilnehmer und von einem Slaveteilnehmer gesendete Nachrichten durch den Segmentmaster des Segments empfangbar und interpretierbar sind, und ein Übergangsbereich als ein Überlappungsbereich definiert wird, in dem sich benachbarte Segmente überlappen.

Diese Ausgestaltung der Erfindung ist insbesondere vorteilhaft, wenn Empfangsbereiche durch eine geeignet begrenzte Reichweite, über die Nachrichten innerhalb des Kommunikationsnetzes in ausreichender Qualität zwischen einem Segmentmaster und einem Slaveteilnehmer ausgetauscht werden können, definiert werden können.

Bei der vorgenannten Ausgestaltung werden die Übertragungsmedien benachbarter Segmente beispielsweise miteinander verbunden oder jeweils als ein Teil eines zusammenhängenden Kommunikationsmediums definiert, falls das Kommunikationsnetz ein derartiges Kommunikationsmedium aufweist.

Eine weitere Ausgestaltung der Erfindung sieht vor, dass die Nachrichten mittels eines Trägerfrequenzverfahrens übertragen werden.

Dies ermöglicht vorteilhaft die Nutzung vorhandener Ressourcen und bekannter Verfahren zur Datenübertragung. Insbesondere ermöglicht es die Verwendung bekannter und preisgünstiger Technologien wie der so genannten Powerline Communication (PLC) zur Datenübertragung in segmentierten Netzen.

Eine bevorzugte Ausgestaltung der Erfindung sieht vor, das erfindungsgemäße Verfahren zur Datenübertragung in einem Schleifleitungsnetz mit wenigstens einem Schleifleiter und wenigstens einem mit einem Schleifleiter verbundenen und entlang des Schleifleiters bewegbaren Slaveteilnehmer zu verwenden.

Im Sinne der Erfindung soll unter einem Schleifleitungsnetz ein Netzwerk für ein Transportsystem oder ein Fördersystem mit automatisch gesteuerten Transportfahrzeugen verstanden werden, deren Aufgabe es ist, Material oder Personen zu transportieren und die über Schleifleiter mit Energie und/oder Daten versorgt werden. Üblicherweise weist das Schleifleitungsnetz dabei mehrere Schleifleiter auf, beispielsweise je einen Schleifleiter für jede Phase einer Wechselspannung, einen Schleifleiter als Schutzleiter und/oder einen oder mehrere Schleifleiter zur Datenübertragung. Beispielsweise gibt es Elektrohängebahnen als Transportsysteme mit Schleifleitungsnetzen. Die Elektrohängebahn ist ein schienengebundenes Fördermittel mit einzeln angetriebenen Transportfahrzeugen. Die Transportfahrzeuge können sich autonom und unabhängig voneinander auf dem Schienensystem bewegen.

Derartige Schleifleitungsnetze sind häufig und vorteilhaft segmentiert, d.h. in Schleifleitungssegmente unterteilt. Daher eignet sich die Erfindung besonders vorteilhaft zur Datenübertragung in einem segmentierten Schleifleitungsnetz, insbesondere wenn die Segmente des Kommunikationsnetzes Schleifleitungssegmenten zugeordnet werden.

Dabei umfasst vorzugsweise wenigstens ein Übertragungsmedium zumindest einen Schleifleiter des Schleifleitungsnetzes.

Dadurch werden vorteilhaft Schleifleiter des Schleifleitungsnetzes zur Datenübertragung verwendet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit einer Zeichnung näher erläutert werden.

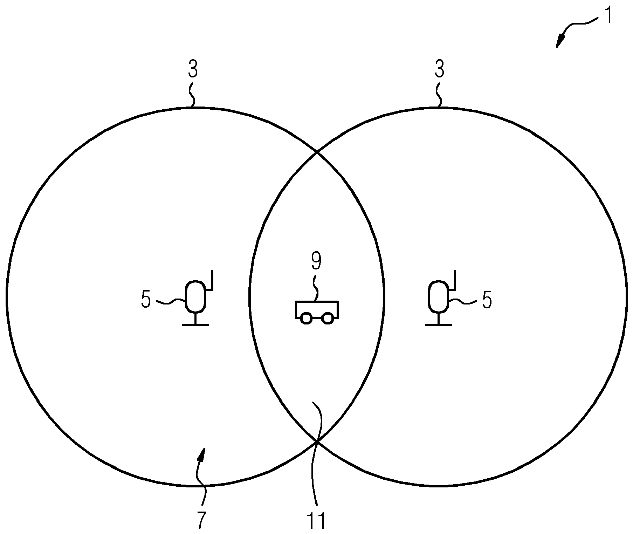

Dabei zeigt die einzige Figur rein schematisch ein Kommunikationsnetz 1, das in mehrere Segmente 3, die jeweils einen ortsfesten Segmentmaster 5 und ein Übertragungsmedium 7 aufweisen, aufgeteilt ist und wenigstens einen mobilen Slaveteilnehmer 9 aufweist, der innerhalb der Segmente 3 und zwischen den Segmenten 3 beweglich ist. Je zwei benachbarte Segmente 3 werden durch einen mit den Übertragungsmedien 7 beider Segmente 3 verbundenen Übergangsbereich 11 verbunden. In der Figur sind beispielhaft nur zwei Segmente 3 und ein Übergangsbereich 11 dargestellt. Das Kommunikationsnetz 1 kann jedoch auch mehr als zwei Segmente 3 und entsprechend mehr Übergangsbereiche 11 aufweisen.

Ein Segmentmaster 5 und ein Slaveteilnehmer 9, der sich in dem Segment 3 des Segmentmasters 5 oder in einem dieses Segment 3 mit einem benachbarten Segment 3 verbindenden Übergangsbereich 11 befindet, kommunizieren über das Übertragungsmedium 7 des Segments 3 des Segmentmasters 5 durch Senden von Nachrichten. Dabei teilt der Segmentmaster 5 dem Slaveteilnehmer 9 mittels wenigstens einer Nachricht wenigstens ein Sendezeitintervall zu, innerhalb dessen der Slaveteilnehmer 9 selbst Nachrichten senden darf, so dass sich die von dem Segmentmaster 5 zugeteilten Sendezeitintervalle nicht überschneiden. Sendezeitintervalle haben beispielsweise Längen im einstelligen Millisekundenbereich.

Vorzugsweise werden dabei von einem Segmentmaster 5 Nachrichten für einen Slaveteilnehmer 9 in einer Nachrichtenwarteschlange zwischengespeichert und in der Nachrichtenwarteschlange zwischengespeicherte Nachrichten werden gebündelt gesendet.

Die Segmentmaster 5 sind beispielsweise jeweils als ein Modem ausgebildet. Die Slaveteilnehmer 9 können ebenfalls jeweils als ein (mobiles) Modem ausgebildet sein oder ein oder mehrere Modems umfassen.

Ein Slaveteilnehmer 9, der sich innerhalb eines Übergangsbereiches 11 befindet, prüft vor dem Senden einer Nachricht, ob die Übertragungsmedien 7 beider durch den Übergangsbereich 11 verbundenen Segmente 3 frei zum Senden einer Nachricht sind, und sendet die Nachricht nur, wenn die Prüfung ergibt, dass beide Übertragungsmedien 7 frei zum Senden einer Nachricht sind. Entsprechend prüft ein Slaveteilnehmer 9, der sich innerhalb eines Segments 3 außerhalb eines Übergangsbereiches 11 befindet, vor dem Senden einer Nachricht, ob das Übertragungsmedium 7 des Segments 3, in dem er sich befindet, frei zum Senden einer Nachricht ist, und sendet die Nachricht nur, wenn die Prüfung ergibt, dass das Übertragungsmedium 7 frei zum Senden einer Nachricht ist. Dabei wird von einem Slaveteilnehmer 9 eine Nachricht natürlich nur innerhalb eines ihm dafür zugeteilten Sendezeitintervalls gesendet.

Die Übertragungsmedien 7 und Übergangsbereiche 11 können je nach Anwendung und Ausgestaltung des Kommunikationsnetzes 1 verschieden ausgebildet sein.

Beispielsweise können die Übertragungsmedien 7 verschiedener Segmente 3 voneinander getrennt sein, so dass Nachrichten aus einem Segment 3 in kein anderes Segment 3 übertragen werden. Dies kann beispielsweise realisiert werden, indem die Übertragungsmedien 7 jeweils als Leitungen ausgebildet werden, über die Daten übertragbar sind, wobei die Leitungen verschiedener Segmente 3 physikalisch voneinander getrennt werden oder durch Netzwerkkomponenten eine Datenübertragung zwischen verschiedenen Segmenten 3 unterbunden wird. In derartigen Fällen sind Leitungen zweier benachbarter Segmente 3 beispielsweise bis in einen diese Segmente 3 verbindenden Übergangsbereich 11 geführt.

Alternativ können die Übertragungsmedien 11 benachbarter Segmente 3 miteinander verbunden sein oder jeweils als ein Teil eines zusammenhängenden Kommunikationsmediums definiert werden. In diesem Fall wird jedes Segment 3 durch eine Reichweite definiert, über die Nachrichten in ausreichender Qualität zwischen einem Segmentmaster 5 und einem Slaveteilnehmer 9 ausgetauscht werden können. Beispielsweise werden Nachrichten über eine durchgehende Leitung übertragen und als Segment 3 wird ein Empfangsbereich über eine Reichweite der Datenübertragung zwischen dem Segmentmaster 5 und einem Slaveteilnehmer 9 entlang der Leitung definiert. In derartigen Fällen wird ein Übergangsbereich 11 als ein Überlappungsbereich definiert, in dem sich benachbarte Segmente 3 überlappen, d.h. in dem Nachrichten zwischen einem Slaveteilnehmer 9 und den Segmentmastern 5 der beiden Segmente 3 in ausreichender Qualität ausgetauscht werden können.

Das Kommunikationsnetz 1 wird beispielsweise zur Datenübertragung in einem Schleifleitungsnetz mit wenigstens einem Schleifleiter und wenigstens einem mit einem Schleifleiter verbindbaren und entlang des Schleifleiters bewegbaren Slaveteilnehmer 9 verwendet. Beispielsweise sind die Slaveteilnehmer 9 dabei Elektrohängebahnen und werden beispielsweise zur Automobilherstellung verwendet. Ein Schleifleiter wird dabei beispielsweise als Übertragungsmedium 7 oder Teil eines Übertragungsmediums 7 verwendet und die Nachrichten können beispielsweise mittels eines Trägerfrequenzverfahrens, einer so genannten Powerline Communication (PLC), übertragen werden.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Datenübertragung in einem Kommunikationsnetz (1), das in mehrere jeweils ein Übertragungsmedium (7) aufweisende Segmente (3) aufgeteilt ist und wenigstens einen Slaveteilnehmer (9) aufweist, wobei
- jedes Segment (3) mit einem Segmentmaster (5) zur Koordinierung der Datenübertragung in dem Segment (3) versehen wird,
- je zwei benachbarte Segmente (3) durch einen mit den Übertragungsmedien (7) beider Segmente (3) verbundenen Übergangsbereich (11) verbunden werden,
- ein Segmentmaster (5) und ein Slaveteilnehmer (9), der sich in dem Segment (3) des Segmentmasters (5) oder in einem dieses Segment (3) mit einem benachbarten Segment (3) verbindenden Übergangsbereich (11) befindet, über das Übertragungsmedium (7) des Segments (3) des Segmentmasters (5) durch Senden von Nachrichten kommunizieren, wobei der Segmentmaster (5) dem Slaveteilnehmer (9) wenigstens ein Sendezeitintervall zum Senden von Nachrichten zuteilt, so dass sich die von dem Segmentmaster (5) zugeteilten Sendezeitintervalle nicht überschneiden,
- ein Slaveteilnehmer (9) innerhalb eines Übergangsbereiches (11) vor dem Senden einer Nachricht prüft, ob die Übertragungsmedien (7) beider durch den Übergangsbereich (11) verbundenen Segmente (3) frei zum Senden einer Nachricht sind, und die Nachricht nur sendet, wenn die Prüfung ergibt, dass beide Übertragungsmedien (7) frei zum Senden einer Nachricht sind,
- ein Slaveteilnehmer (9) innerhalb eines Segments (3) vor dem Senden einer Nachricht prüft, ob das Übertragungsmedium (7) des Segments (3), in dem er sich befindet, frei zum Senden einer Nachricht ist, und die Nachricht nur sendet, wenn die Prüfung ergibt, dass das Übertragungsmedium (7) frei zum Senden einer Nachricht ist und
- wobei die Nachrichten mittels eines Trägerfrequenzverfahrens übertragen werden.

2. Verfahren nach Anspruch 1,
**dadurch gekennzeichnet, dass** von einem Segmentmaster (5) Nachrichten für einen Slaveteilnehmer (9) in einer Nachrichtenwarteschlange zwischengespeichert und in der Nachrichtenwarteschlange zwischengespeicherte Nachrichten gebündelt gesendet werden.

3. Verfahren nach einem der vorhergehenden Ansprüche,
**dadurch gekennzeichnet, dass** die Übertragungsmedien (7) verschiedener Segmente (3) voneinander getrennt werden, so dass Nachrichten aus einem Segment (3) in kein anderes Segment (3) übertragen werden.

4. Verfahren nach einem der Ansprüche 1 oder 2,
**dadurch gekennzeichnet, dass** jedes Segment (3) als ein Empfangsbereich definiert wird, innerhalb dessen von dem Segmentmaster (5) des Segments (3) gesendete Nachrichten durch einen Slaveteilnehmer (9) und von einem Slaveteilnehmer (9) gesendete Nachrichten durch den Segmentmaster (5) des Segments (3) empfangbar und interpretierbar sind, und ein Übergangsbereich (11) als ein Überlappungsbereich definiert wird, in dem sich benachbarte Segmente (3) überlappen.

5. Verfahren nach Anspruch 4,
**dadurch gekennzeichnet, dass** die Übertragungsmedien (7) benachbarter Segmente (3) miteinander verbunden werden.

6. Verfahren nach Anspruch 4 oder 5,
**dadurch gekennzeichnet, dass** das Kommunikationsnetz (1) ein zusammenhängendes Kommunikationsmedium aufweist und die Übertragungsmedien (7) der einzelnen Segmente (3) jeweils als ein Teil des Kommunikationsmediums definiert werden.

7. Verwendung des Verfahrens nach einem der vorhergehenden Ansprüche zur Datenübertragung in einem Schleifleitungsnetz mit wenigstens einem Schleifleiter und wenigstens einem mit einem Schleifleiter verbundenen und entlang des Schleifleiters bewegbaren Slaveteilnehmer (9).

8. Verwendung nach Anspruch 7,
**dadurch gekennzeichnet, dass** wenigstens ein Übertragungsmedium (7) zumindest einen Schleifleiter des Schleifleitungsnetzes umfasst.

## Claims

1. Method for data transmission in a communication network (1) which is split into a plurality of segments (3), each having a transmission medium (7), and which has at least one slave subscriber (9), wherein
- each segment (3) is provided with a segment master (5) in order to coordinate the data transmission in the segment (3),
- two respective adjacent segments (3) are connected by a transition region (11) connected to the transmission media (7) of both segments (3),
- a segment master (5) and a slave subscriber (9), which is situated in the segment (3) of the segment master (5) or in a transition region (11) connecting this segment (3) to an adjacent segment (3), communicate via the transmission medium (7) of the segment (3) of the segment master (5) by sending messages, wherein the segment master (5) assigns the slave subscriber (9) at least one transmission time interval for sending messages, so that the transmission time intervals assigned by the segment master (5) do not overlap,
- a slave subscriber (9) within a transition region (11) checks prior to the sending of a message whether the transmission media (7) of both segments (3) connected by the transition region (11) are free to send a message, and sends the message only if the check reveals that both transmission media (7) are free to send a message,
- a slave subscriber (9) within a segment (3) checks prior to the sending of a message whether the transmission medium (7) of the segment (3) in which it is situated is free to send a message, and sends the message only if the check reveals that the transmission medium (7) is free to send a message,
- wherein the messages are transmitted by means of a carrier frequency method.

2. Method according to claim 1,
**characterised in that** messages for a slave subscriber (9) are buffered by a segment master (5) in a message queue and messages buffered in the message queue are sent in bundled fashion.

3. Method according to one of the preceding claims,
**characterised in that** the transmission media (7) of different segments (3) are separated from one another so that messages from one segment (3) are not transmitted into any other segment (3).

4. Method according to one of claims 1 to 2,
**characterised in that** each segment (3) is defined as a receive region within which messages sent by the segment master (5) of the segment (3) can be received and interpreted by a slave subscriber (9) and messages sent by a slave subscriber (9) can be received and interpreted by the segment master (5) of the segment (3), and a transition region (11) is defined as an overlap region in which adjacent segments (3) overlap.

5. Method according to claim 4,
**characterised in that** the transmission media (7) of adjacent segments (3) are connected to one another.

6. Method according to claim 4 or 5,
**characterised in that** the communication network (1) has a contiguous communication medium and the transmission media (7) of the individual segments (3) are in each case defined as a part of the communication medium.

7. Application of the method according to one of the preceding claims for data transmission in a contact conductor network having at least one contact conductor and at least one slave subscriber (9) connected to a contact conductor and capable of movement along the contact conductor.

8. Application according to claim 7,
**characterised in that** at least one transmission medium (7) comprises at least one contact conductor of the contact conductor network.

## Revendications

1. Procédé de transmission de données dans un réseau (1) de communication, qui est subdivisé en plusieurs segments (3), ayant chacun un support (7) de transmission, et qui a au moins un participant (9) esclave, dans lequel
- chaque segment (3) est pourvu d'un maître (5) de segment pour coordonner la transmission de données dans le segment (3),
- respectivement deux segments (3) voisins sont reliés par une région (11) de transition reliée aux deux supports (7) de transmission des deux segments (3),
- un maître (5) de segment et un participant (9) esclave, qui se trouvent dans le segment (3) du maître (5) de segment ou dans une région (11) de transition reliant ce segment (3) à un segment (3) voisin, communiquent par envoi de messages par l'intermédiaire du support (7) de transmission du segment (3) du maître (5) de segment, le maître (5) de segment accordant au participant (9) esclave un intervalle de temps d'envoi pour l'envoi de messages, de manière à ce que les intervalles de temps d'envoi, accordés par le maître (5) de segment, ne se recoupent pas,
- un participant (9) esclave contrôle, dans une région (11) de transition, avant l'envoi d'un message, si les supports (7) de transmission des deux segments (3), reliés par la région (11) de transition, sont libres d'envoyer un message et n'envoie le message que si le contrôle indique que les deux supports (7) de transmission sont libres d'envoyer un message,
- un participant (9) esclave contrôle, au sein d'un segment (3), avant l'envoi d'un message, si le support (7) de transmission du segment (3), dans lequel il se trouve, est libre d'envoyer un message et n'envoie le message que si le contrôle indique que le support (7) de transmission est libre d'envoyer un message et
- dans lequel les messages sont transmis au moyen d'un procédé à fréquence porteuse.

2. Procédé suivant la revendication 1,
**caractérisé en ce qu'**il est mis en mémoire tampon dans une file d'attente de messages, par un maître (5) de segment, des messages pour un participant (9) esclave et des messages, mis en mémoire tampon dans la file d'attente de messages, sont envoyés en faisceau.

3. Procédé suivant l'une des revendications précédentes,
**caractérisé en ce que** les supports (7) de transmission de segment (3) différents sont séparés les uns des autres, de manière à ce que des messages d'un segment (3) ne soient pas transmis à un autre segment (3).

4. Procédé suivant l'une des revendications 1 ou 2,
**caractérisé en ce que** chaque segment (3) est défini comme une région de réception au sein de laquelle des messages, envoyés par le maître (5) de segment du segment (3), peuvent être reçus et interprétés par un participant (9) esclave et des messages, envoyés par un participant (9) esclave, peuvent être reçus et interprétés par le maître (5) de segment du segment (3) et une région (11) de transmission est définie comme une région de chevauchement, dans laquelle des segments (3) voisins se chevauchent.

5. Procédé suivant la revendication 4,
**caractérisé en ce que** les supports (7) de transmission de segments (3) voisins sont reliés l'un à l'autre.

6. Procédé suivant la revendication 4 ou 5,
**caractérisé en ce que** le réseau (1) de communication a un support de communication d'un seul tenant et les supports (7) de transmission des divers segments (3) sont définis chacun comme une partie du support de communication.

7. Utilisation du procédé suivant l'une des revendications précédentes pour transmettre des données dans un réseau de lignes de contact, comprenant au moins une ligne de contact et au moins un participant (9) esclave relié à une ligne de contact et mobile le long de la ligne de contact.

8. Utilisation suivant la revendication 7,
**caractérisé en ce qu'**au moins un support (7) de transmission comprend au moins une ligne de contact du réseau de lignes de contact.
